# EUROPEAN PATENT SPECIFICATION

(11) **EP 3 361 693 B1**
(45) Date of publication and mention of the grant of the patent: **25.12.2019**
(21) Application number: 16867555.1
(22) Date of filing: 18.03.2016
(51) Int. Cl.: H04L 29/06, H04L 1/16

(54) **TCP CONNECTION PROCESSING METHOD, DEVICE AND SYSTEM**
TCP-VERBINDUNG-VERARBEITUNGSVERFAHREN, -VORRICHTUNG UND -SYSTEM
PROCÉDÉ, DISPOSITIF ET SYSTÈME DE TRAITEMENT DE CONNEXION TCP

(30) Priority: 24.11.2015 CN 201510827413
(43) Date of publication of application: 15.08.2018
(73) Proprietor: Wangsu Science & Technology Co., Ltd., Shanghai 200030 (CN)
(72) Inventor: MA, Tao, Shanghai 200030 (CN); CHEN, Wensheng, Shanghai 200030 (CN)
(74) Representative: Hanna Moore + Curley
(86) International application number: PCT/CN2016/076786
(87) International publication number: WO 2017/088326

(56) References cited:
- CN-A- 101 436 958
- CN-A- 101 478 537
- CN-A- 101 594 359
- CN-A- 102 780 688
- CN-A- 103 475 657
- US-A1- 2006 230 129
- US-A1- 2014 283 057
- US-A1- 2015 207 815
- US-B1- 9 027 129

## Description

### FIELD OF THE DISCLOSURE

The present disclosure relates to the field of Internet and, more particularly, relates to a processing method, a device, and a system for TCP connection.

### BACKGROUND

A SYN FLOOD attack is a very important form of distributed denial-of-service (DDoS) attack. It has features such as being started easily and having obvious effects, and can rapidly affect the performance of a server, which causes the service of the server unavailable to use.

The SYN FLOOD attack utilizes the weakness of the protocol being very vulnerable during the processing process of three-way handshake when establishing the TCP connection, and sends a large amount of forged TCP connection requests to force the server to maintain a large amount of half-connections. Thus, the resources of the server being attacked are exhausted, which affects the establishment of normal connection.

During the normal processing process of establishing a connection through TCP, each time a server receives a SYN packet, a connection table item is created in the kernel protocol stack, and further processing may be performed upon receiving subsequent messages of the connection. The attacker often sends a large amount of SYN packets to the server by forging the source IP, where each SYN packet allows the server to create a connection table item in the half-connected state named SYN_RECV. Because there is no subsequent ACK packet, the server cannot complete the TCP three-way handshake. Thus, these connections will remain in the half-connected state of SYN_RECV for a certain period of time. When the number of connections in the half-connected state reaches a preset value, the server consumes vast resources to maintain the very large half-connection list. Accordingly, the processing speed of the server on normal connections becomes very slow, and the normal connection may even not be established.

Currently, the protection approaches in existing technologies that are typically applied in response to the SYN FLOOD attack include the approach based on SYN COOKIE authorization in which, after receiving the SYN packet, the protection device or protection module does not hand over the SYN packet to the server, but first confirms whether the source IP client that sends the SYN packet can establish a normal connection based on the three-way handshake, and then forwards the IP packet to the server. One specific processing approach is to: first respond with the SYN COOKIE, and after the subsequent ACK authorization is passed, add the source IP to a whitelist and cut off the current connection. Further, the client re-starts a connection, and because the source IP has been added to the whitelist, the subsequent packet(s) of the source IP may be forwarded to the server. Another specific processing approach is to: establish a TCP proxy, and after the SYN COOKIE authorization is passed, the protection device acts as a client to start a new connection with the server and to forward the request of the client to the server through the connection.

The foregoing existing protection approaches have the following two drawbacks:
1. The approach that utilizes the whitelist after ACK authorization is passed interrupts the normal connection with the client that has passed the authorization, such that the client needs to re-start connection and send a request to the server once again, which elongates the response time and affects the client's experience.
2. In the approach that uses the TCP proxy, the protection device needs to maintain a large amount of connection information in a connected status at the same time and needs to forward the TCP connection, which affects the protection performance and elongates response delay.

Currently, there are no effective solutions directing towards the aforementioned issues of low protection performance and delay in connection response caused by the need to re-establish connection after validating the TCP connection sent by the client.

The relevant state of the art is represented by US 2014/283057 A1, US 2015/207815 A1 and US 9027129 B1.

### BRIEF SUMMARY OF THE DISCLOSURE

The present teaching provides methods, device and system as detailed in the claims. Advantageous features are provided in dependent claims.

Embodiments of the present disclosure provide a processing method, a device, and a system for TCP connection, thereby at least solving the technical issues of low protection performance and delay in connection response cause by the need to re-establish connection after validating the TCP connection sent by the client.

According to one aspect of the present disclosure, a processing system for TCP connection is provided. The processing system includes: a protection device that establishes communication connection with a client, which is configured to receive a connection packet sent by the client for establishing a TCP connection with the server and to determine the packet type of the connection packet. When the packet type of the connection packet is ACK packet, the connection verification information is utilized to perform verification of the ACK packet, and when the verification of the ACK packet is passed, the ACK packet is forwarded to a connection device that is configured by the server. The processing system further includes the connection device configured at the server that establishes connections with the client and the protection device, respectively. The connection device is configured to receive the connection packet forwarded by the protection device for establishing a TCP connection with the server and to determine the packet type of the connection packet. When the packet type of the connection packet is the ACK packet, verification of the ACK packet is performed based on pre-configured verification rules, and when the verification of the ACK packet is passed, the ACK packet is utilized to establish the TCP connection with the client that sends the ACK packet.

According to another aspect of the present disclosure, a processing method for TCP connection is provided, which is applicable to a protection device. The method includes: receiving a connection packet sent by a client for establishing a TCP connection with a server; determining a packet type of the connection packet, where the packet type of the connection packet at least includes SYN packet and ACK packet; when the packet type of the connection packet is the ACK packet, utilizing connection verification information to perform verification of the ACK packet, where the connection verification information is generated based on the SYN packet; and when the verification of the ACK packet is passed, forwarding the ACK packet to the server.

Further, when the packet type of the connection packet is the SYN packet, after determining the packet type of the connection packet, the method further includes: within a pre-configured period of time, counting the packet number of the SYN packets; determining whether the packet number is greater than or equal to a pre-configured threshold; when the packet number is greater than or equal to the threshold, generating the connection verification information based on the SYN packets; when the packet number is smaller than the threshold, forwarding the SYN packets to the server.

Further, after the verification of the ACK packet is passed, the method further includes: acquiring a first client address of the client that sends the ACK packet; and saving the first client address to a pre-created client address list.

Further, after utilizing the connection verification information to perform verification of the ACK packet, the method further includes: when the verification of the ACK packet is not passed, acquiring a second client address of the client that sends the ACK packet; matching the second client address with the client address list; when the second client address matches an address in the client address list, forwarding the ACK packet to the server; and when the second client address does not match any address in the client address list, discarding the ACK packet.

According to another aspect of the present disclosure, a processing device for TCP connection is further provided, applicable to a protection device. The device includes: a first receiving module configured to receive a connection packet sent by a client for establishing a TCP connection with a server; a first determining module, configured to determine a packet type of the connection packet, where the packet type of the connection packet at least includes SYN packet and ACK packet; a first verifying module, configured to utilize connection verification information to perform verification of the ACK packet when the packet type of the connection packet is the ACK packet, where the connection verification information is generated based on the SYN packet; a first forwarding module, configured to forward the ACK packet to the server when verification of the ACK packet is passed.

Further, the device also includes: a counting module, configured to count the packet number of the SYN packets within a pre-configured period of time; a second determining module, configured to determine whether the packet number is greater than or equal to a pre-configured threshold; a generating module, configured to generate connection verification information based on the SYN packets when the packet number is greater than or equal to the threshold; and a second forwarding module, configured to forward the SYN packets to the server when the packet number is smaller than the threshold.

Further, the device also includes: a first acquiring module, configured to acquire a first client address of the client that sends the ACK packet; and a storing module, configured to save the first client address to a pre-created client address list.

Further, the device also includes: a second acquiring module, configured to acquire a second client address of the client that sends the ACK packet when the verification of the ACK packet is not passed; a matching module, configured to match the second client address with the client address list; a third forwarding module, configured to forward the ACK packet to the server when the second client address matches an address in the client address list; and a discarding module, configured to discard the ACK packet when the second client address does not match any address in the client address list.

According to another aspect of the present disclosure, a processing method for TCP connection is provided, applicable to a server. The method includes: receiving a connection packet forwarded by a protection device for establishing a TCP connection with a server; determining a packet type of the connection packet, where the packet type of the connection packet at least includes SYN packet and ACK packet; when the packet type of the connection packet is the ACK packet, performing verification of the ACK packet based on pre-configured verification rules; and when verification of the ACK packet is passed, utilizing the ACK packet to establish a TCP connection with the client that sends the ACK packet.

According to another aspect of the present disclosure, a processing device for TCP connection is provided, applicable to a server. The device includes: a second receiving module, configured to receive a connection packet forwarded by a protection device for establishing a TCP connection with the server; a third determining module, configured to determine a packet type of the connection packet, where the packet type of the connection packet at least includes SYN packet and ACK packet; a second verifying module, configured to perform verification of the ACK packet based on pre-configured verification rules when the packet type of the connection packet is ACK packet; a first connecting module, configured to utilize the ACK packet to establish a TCP connection with the client that sends the ACK packet when verification of the ACK packet is passed.

In embodiments of the present disclosure, a connection packet is received from a client for establishing a TCP connection with a server; a packet type of the received connection packet is determined, where the packet type of the connection packet at least includes SYN packet and ACK packet; when the packet type of the connection packet is the ACK packet, connection verification information is utilized to perform verification of the ACK packet, where the connection verification information is generated based on the SYN packet; and when the verification of the ACK packet is passed, the ACK packet is forwarded to the server. Accordingly, the objective of defending against the SYN FLOOD attack can be achieved, thereby achieving the technical effects of improving the performance of defending against the SYN FLOOD attack. Further, issues of low protection performance and delay in connection response caused by the need to re-establish connection after validating the TCP connection sent by the client may be solved.

### BRIEF DESCRIPTION OF THE DRAWINGS

The accompanying drawings illustrated herein are provide for further understanding of the present disclosure, thus forming a part of the present disclosure. The exemplary embodiments of the present disclosure and illustrations thereof are used to explain the present disclosure, which does not constitute any inappropriate limitation of the present disclosure. In the accompanying drawings:
FIG. 1 illustrates a structural schematic view of a processing system for TCP connection according to embodiments of the present disclosure;
FIG. 2 illustrates a flowchart schematic view of an existing TCP connection;
FIG. 3 illustrates a flowchart schematic view of a processing system for TCP connection according to embodiments of the present disclosure;
FIG. 4 illustrates a flowchart schematic view of a processing method for TCP connection according to embodiments of the present disclosure;
FIG. 5 illustrates a processing flowchart schematic view of a processing method for TCP connection according to embodiments of the present disclosure;
FIG. 6 illustrates a schematic view of a processing device for TCP connection according to embodiments of the present disclosure;
FIG. 7 illustrates a flowchart schematic view of a processing method for TCP connection according to embodiments of the present disclosure;
FIG. 8 illustrates a processing flowchart schematic view of a processing method for TCP connection according to embodiments of the present disclosure; and
FIG. 9 illustrates a schematic view of a processing device for TCP connection according to embodiments of the present disclosure.

### DETAILED DESCRIPTION

To allow those skilled in the relevant art to better understand solutions of the present disclosure, technical solutions of the present disclosure are described clearly and fully with reference to the accompanying drawings of the present disclosure. Obviously, the described embodiments are merely a part of the present disclosure, but not entire embodiments. Based on the disclosed embodiments, all other embodiments obtainable by those ordinarily skilled in the relevant art without creative labor shall all fall within the scope of the present disclosure.

It should be noted that, in the specification, claims, and accompanying drawings of the present disclosure, terms such as "first" and "second" are merely used to differentiate similar objects, but are not intended to describe a certain order or sequence. It should be understood in such a way that the applied data may be exchangeable under appropriate situations, such that the embodiments of the present disclosure described herein may be implemented through orders illustrated or described herein. Further, the terms "including", "comprising" or any other variations are intended to cover non-exclusive including. For example, the process, method, article, or device including a series of steps or units are not necessarily limited to those clearly listed steps or units, but may include other steps or units intrinsic to the process, method, article or device that are not clearly listed.

### Embodiment 1:

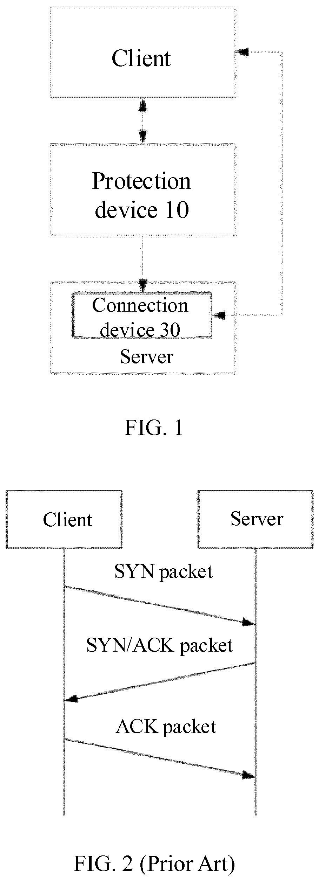

Before further detail of each embodiment of the present disclosure is described, FIG. 1 is used as reference to describe an appropriate computer system structure that is configured to implement the principles of the present disclosure. In the following descriptions, unless otherwise indicated, each embodiment of the present disclosure may be described referring to reference numerals of actions and operations that are executable by one or more computers. Thus, it can be understood that, the computer-executable actions and operations may include operations performed by the processing unit of the computer on the electrical signals that character data in a structural format, such that the operations of the computer can be reconfigured or changed in a way understandable by those skilled in the relevant art. The data structure that maintains data is the physical location of the memory that has specific property defined by the data format. However, though the foregoing and following descriptions are used to illustrate the present disclosure, the present disclosure is not intended to be limiting. As understood by those skilled in the relevant art, various aspects of the actions and operation described hereinafter may also be implemented using hardware.

In the basic configuration, FIG. 1 illustrates a structural schematic view of a processing system for TCP connection according to embodiments of the present disclosure. For purposes of illustration, the described structure of system is merely an example of the proper environment, which does not exert any limitations on the scope or functions described in the present disclosure. Further, the disclosed computer system shall not be illustrated as relying on or having requirement on any component or combinations thereof shown in FIG. 1.

As shown in FIG. 1, the disclosed processing system for TCP connection may include: a protection device 10 and a connection device 30.

The protection device 10 establishes communication connection with a client through the Internet, and is configured to receive a connection packet sent by the client for establishing a TCP connection with the server and to determine the packet type of the connection packet. When the packet type of the connection packet is ACK packet, the connection verification information is utilized to perform verification of the ACK packet, and when the verification of the ACK packet is passed, the ACK packet is forwarded to the connection device that is configured by the server. The connection device 30 is configured at the server, and establishes connections with the client and the protection device, respectively. The connection device 30 is configured to receive the connection packet forwarded by the protection device for establishing a TCP connection with the server and to determine the packet type of the connection packet. When the packet type of the connection packet is the ACK packet, verification of the ACK packet is performed based on pre-configured verification rules, and when the verification of the ACK packet is passed, the ACK packet is utilized to establish the TCP connection with the client that sends the ACK packet.

Specifically, as shown in FIG. 2, for transmitting TCP data between the client and the server, a virtual circuit needs to be first established, i.e., TCP connection. When the TCP connection is established, the client first sends a TCP packet including a SYN marker, i.e., a SYN packet. After receiving the SYN packet sent by the client, the server sends back a SYN/ACK packet, indicating that the TCP connection request sent by the client is received by the server. Further, the client sends back the ACK packet to the server based on the SYN/ACK packet. Accordingly, a TCP connection is established between the client and the server.

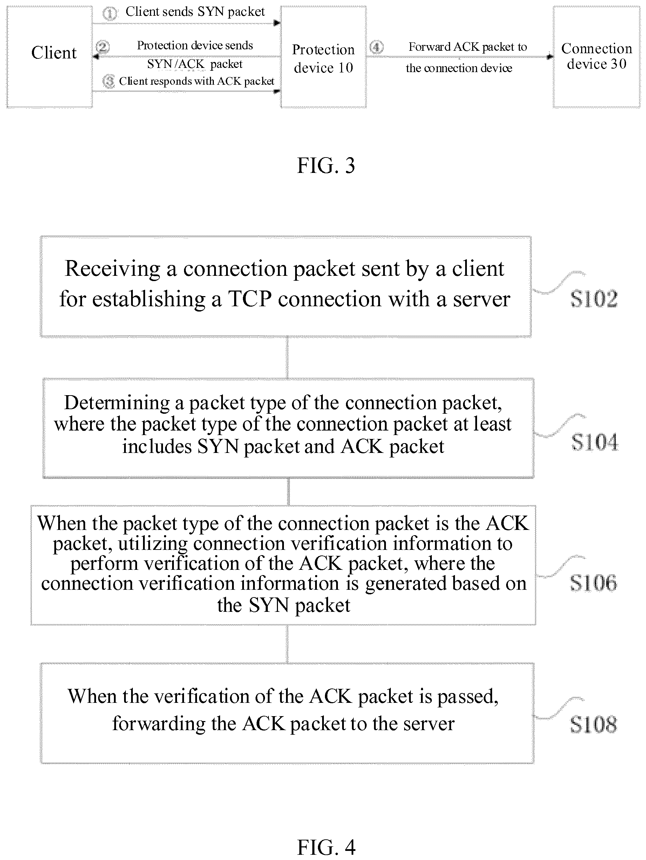

As shown in FIG. 3, when establishing the TCP connection, the server may at least receive the SYN packet and the ACK packet sent by the client. Through the aforementioned protection device 10 and the connection device 30, the protection device 10 configured at the server may process the connection packet based on the packet type of the connection packet after receiving the connection packet sent by the client that is configured to establish the TCP connection with the server. When the packet type of the connection packet is the ACK packet, verification of the ACK packet is performed. When the ACK packet passes verification, the ACK packet is forwarded to the connection device 30 configured at the server, and communication connection is established between the client and the server. Accordingly, the objective of defending against the SYN FLOOD attack can be achieved, thereby realizing the technical effect of improving the performance of defending against the SYN FLOOD attack. Further, issues of low protection performance and delay in connection response caused by the need to re-establish connection after validating the TCP connection sent by the client may be solved.

Further, when the packet type received by the protection device 10 is SYN packet, the protection device 10 conducts a counting process on the number of the received SYN packets. Further, the protection device 10 counts the packet number of the SYN packets received in a pre-configured period of time. When the packet number of the SYN packets received within the pre-configured period of time exceeds a pre-configured threshold, SYN FLOOD attack may occur. Thus, the received SYN packets need to be verified. When the packet number of the SYN packets received within the pre-configured period of time is smaller than a pre-configured threshold, it is considered that SYN FLOOD attack does not occur. Thus, the SYN packets are directly forwarded to the connection device, and the connection device configured at the server directly establishes a TCP connection with the client.

Further, when the verification of the ACK packet is passed, the client that sends the ACK packet may be confirmed as a legal client conducting normal access. Thus, a first client address of the client is acquired through the protection device 10, and the first client address is added to the pre-created client address list. In particular, the client address list is configured to record the address information of legal clients.

Further, when the verification of the ACK packet is not passed, a second client address of the client that sends the ACK packet is acquired through the protection device 10, and the second client address is matched with the address information in the pre-created client address list. If the second client address matches the address information in the client address list, it is indicated that the ACK packet is sent by a legal client. Thus, the ACK packet information is forwarded to the connection device. If the second client address does not match the address information in the client address list, the client is considered as an illegal client, and the ACK packet sent by the client is discarded.

Further, after receiving the connection packet forwarded by the protection device, through the connection device 30, the packet type of the connection packet is determined. When the packet type of the connection packet is ACK packet, verification of the ACK packet is performed based on the pre-configured verification rules. When the verification of the ACK packet is passed, the ACK packet is utilized to establish a TCP connection with the client. When the verification of the ACK packet is not passed, the ACK packet is directly discarded. The verification rules are consistent with the verification rules in the protection device, and through the verification approach of SYN COOKIE, verification of the ACK packet is performed, and the specific verification approach is not repeatedly described herein.

Further, when the packet type of the connection packet is SYN packet, through the connection device 30, the SYN packet is utilized to allow the connection device to directly establish a TCP connection with the client.

By enabling the protection device to cooperate and work with the connection device, the aforementioned processing system for TCP connection may effectively fulfill processing of the verification and connection during the SYN FLOOD defending process.

Specifically, the protection device is responsible for detecting and verifying the SYN FLOOD, and forwarding the ACK packet that passes the SYN COOKIE authorization to the connection device. When the verification of the ACK packet is not passed, the protection device further acquires the client address of the client that sends the ACK packet, and perform corresponding processing based on a searching result of the client address list.

More specifically, after completing the detection and verification of the SYN packet, the aforementioned protection device sends a SYN/ACK packet to the client based on the received SYN packet and verifies the received ACK packet.

The connection device is configured to, after receiving the connection packet forwarded by the protection device, perform detection and verification once again. When verification is passed, a connection table item is created in the kernel protocol stack. The subsequent communication request(s) of the connection may be directly forwarded to a receiver of the server, and may be sent by the receiver to the kernel protocol stack for processing. By processing of the connection device, the communication connection may be created rapidly at the server, thereby preventing connection interruption and any issue brought by using the protection device to perform the TCP proxy.

Specifically, the major functions of the aforementioned connection device are to perform verification of the connection packet forwarded by the protection device, and for the connection packet that passes verification, create a corresponding connection table item in the kernel based on the packet type of the connection packet. The packet without content of COOKIE and the SYN packet are handed over to the kernel protocol stack for processing.

As such, to solve the performance issue and the problem of the delay in the response caused by the defending process of SYN FLOOD being too complicated, the disclosed system proposes improved solutions for defending against SYN FLOOD to address the two drawbacks of the conventional SYN FLOOD defending. Thus, the aforementioned embodiments primarily solve following issues:
(1) in the current conventional processing methods for TCP connection, after performing the SYN COOKIE authorization, because the first connection is used for verification, this connection needs to be disconnected or the TCP proxy server needs to be applied for proxy, which results in the delay of response.
(2) in the existing verification approach, after performing SYN COOKIE authorization of the ACK packet, utilization of the whitelist or the TCP proxy may bring in performance loss of the protection device.

The protection device that adopts the aforementioned processing method for TCP connection may replace the server to establish the handshake process of the TCP connection with the client, thereby completing verification of the SYN packet. The protection device forwards the ACK packet sent by the normal client that is configured for TCP connection to the connection device, and the connection device may create a TCP connection based on information of the ACK packet. A complete establishment process of TCP connection is fulfilled by the protection device and the connection device together, and the client may not sense such process. Accordingly, during SYN FLOOD defending process, the verification and the establishment of the TCP connection may be effectively completed, which ensures the client's experience.

### Embodiment 2

According to embodiments of the present disclosure, a processing method for TCP connection is provided, and the method may be applied to the protection device. FIG. 4 illustrates a flowchart schematic view of a processing method for TCP connection according to embodiments of the present disclosure.

As shown in FIG. 4, the aforementioned processing method for TCP connection includes the following steps:
At step S102, receiving a connection packet sent by a client for establishing a TCP connection with a server.
At step S104, determining a packet type of the connection packet, where the packet type of the connection packet at least includes SYN packet and ACK packet.
At step S106, when the packet type of the connection packet is the ACK packet, utilizing connection verification information to perform verification of the ACK packet, where the connection verification information may be generated based on the SYN packet.
At step S108, when the verification of the ACK packet is passed, forwarding the ACK packet to the server.

More specifically, as shown in FIG. 2, to transmit TCP data between the client and the server, a virtual circuit needs to be first established, i.e., TCP connection. When establishing the TCP connection, the client first sends a TCP packet including a SYN marker, i.e., SYN packet. After receiving the SYN packet sent by the client, the server sends back a SYN/ACK packet, indicating that the TCP connection request sent by the client is received by the server. Further, the client sends back the ACK packet to the server based on the SYN/ACK packet. Accordingly, a TCP connection is established between the client and the server.

Thus, as shown in FIG. 3, when establishing the TCP connection, the server may at least receive the SYN packet and the ACK packet that are sent by the client. Through the aforementioned steps S102 and S108, after receiving the connection packet sent by the client that is configured to establish the TCP connection with the server, the protection server configured at the server may process the connection packet based on the packet type of the connection packet. When the packet type of the connection packet is the ACK packet, verification of the ACK packet is performed. When the ACK packet passes verification, the ACK packet is forwarded to the connection device configured at the server, and communication connection is established between the client and the server. Accordingly, the objective of defending against the SYN FLOOD attack can be achieved, thereby realizing the technical effect of improving the performance of defending against the SYN FLOOD attack. Further, issues of low protection performance and delay in connection response caused by the need to re-establish connection after validating the TCP connection sent by the client may be solved.

The protection device that adopts the aforementioned processing method for TCP connection may replace the server to establish the handshake process of the TCP connection with the client, thereby completing verification of the SYN packet. The protection device forwards the ACK packet sent by the normal client that is configured for TCP connection to the connection device, and the connection device may create the TCP connection based on information of the ACK packet. A complete establishment process of TCP connection is thus fulfilled by the protection device and the connection device together, without letting the client to notice the process. Accordingly, during SYN FLOOD defending process, the verification and the establishment of the TCP connection may be effectively completed, which ensures the client's experience.

As an optional embodiment, when the packet type of the connection packet is SYN packet, after determining the packet type of the received connection packet at step S104, the method further includes:
Step S51: within a pre-configured period of time, counting the packet number of the SYN packets.
Step S53, determining whether the packet number is greater than or equal to a pre-configured threshold.
Step S55, when the packet number is greater than or equal to the threshold, generating connection verification information based on the SYN packets.
Step S57, when the packet number is smaller than the threshold, forwarding the SYN packets to the server.

Specifically, through the steps S51 to S57, when the received packet type is SYN packet, the protection device conducts counting processing on the number of the received SYN packets, and counts the packet number of the SYN packets received in a pre-configured period of time. When the packet number of the SYN packets received within the pre-configured period of time exceeds a pre-configured threshold, SYN FLOOD attack may occur. Thus, verification of the SYN packets that are received is performed. When the packet number of the SYN packets received within the pre-configured period of time is smaller than a pre-configured threshold, it is considered that SYN FLOOD attack does not occur, the SYN packets are directly forwarded to the connection device, and the connection device configured at the server directly establishes a TCP connection with the client.

In practical applications, the threshold used for determining whether SYN FLOOD attack is received may be configured based on the daily average access flow of the server and the processing capability of the server. Regarding the pre-configured period of time within which the packet number is counted, to timely find the attack, the pre-configured period of time for counting the packet number may be configured to be approximately 1 second or several seconds during configuration.

As an optional embodiment, after the verification of the ACK packet is passed at step S108, the method further includes:
Step S109, acquiring a first client address of the client that sends the ACK packet.
Step S110, saving the first client address to a pre-created client address list.

Specifically, when the verification of the ACK packet is passed, the client that sends the ACK packet may be confirmed as a legal client conducting normal access. Thus, the first client address of the client may be acquired through step S109 to step S 110, and the first client address may be added to the pre-created client address list. The client address list is configured to record the address information of legal clients.

As an optional embodiment, after utilizing the connection verification information to perform verification of the ACK packet at step S106, the method further includes:
Step S71, when the verification of the ACK packet is not passed, acquiring a second client address of the client that sends the ACK packet.
Step S73, matching the second client address with the client address list.
Step S75, when the second client address matches an address in the client address list, forwarding the ACK packet to the server.
Step S77, when the second client address does not match any address in the client address list, discarding the ACK packet.

Specifically, when the verification of the ACK packet is not passed, the second client address of the client that sends the ACK packet is acquired through step S71 to step S77, and the second client address is matched with the address information in the pre-created client address list. If the second client address matches the address information in the client address list, it is indicated that the ACK packet is sent by a legal client. Thus, the ACK packet information is forwarded to the connection device. If the second client address does not match the address information in the client address list, the client is considered as an illegal client, and the ACK packet sent by the client is discarded.

As an optional embodiment, the client address list may also record the address information of illegal client(s). When the second client address does not match the address in the client address list, the second client address is added to the pre-configured address list that is configured to record the address information of the illegal clients. Further, each time the protection device receives the connection packet sent by the client, the protection device acquires the address information of the client that sends the connection packet. Based on the aforementioned address list and the aforementioned address information, the legality of the client may be directly determined.

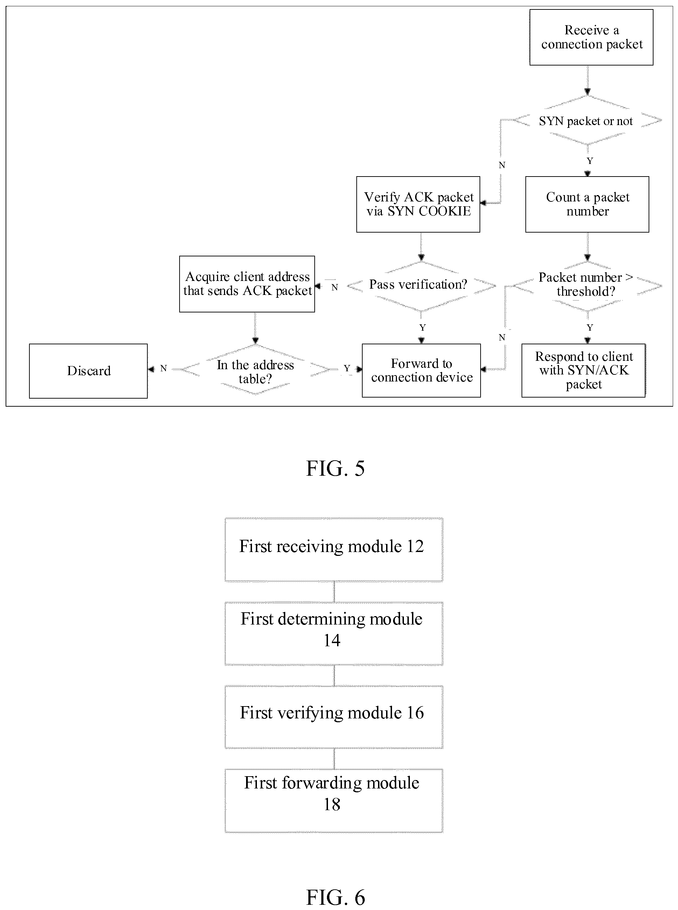

As an optional embodiment, as shown in FIG. 5, in practical applications, steps of the aforementioned method executed in the protection device may include:
Step 1, receiving a connection packet sent by a client.
Step 2, if the connection packet is a SYN packet, counting a packet number of the SYN packets received per second. When the packet number exceeds a pre-configured threshold, defending is performed, and responding SYN COOKIE to the client through the protection device; otherwise, forwarding the SYN packet to the connection device.
Step 3, if the connection packet is ACK packet, performing SYN COOKIE authorization of the ACK packet. When verification is passed, the ACK packet is forwarded to the connection device; when verification is not passed, acquiring the address information of the ACK packet that is sent and inquiring whether the address information exists in the client address list. If the address information is not in the client address list, the ACK packet is discarded.

For connection packet that passes the SYN COOKIE authorization, various approaches may be applied to notify the connection device that the connection packet is a connection packet that passes verification. All approaches fall within the scope of the present disclosure, which is not specifically defined herein.

### Embodiment 3

According to embodiments of the present disclosure, a processing device for TCP connection is further provided. The processing device is applied to a protection device. FIG. 6 illustrates a schematic view of a processing device for TCP connection according to embodiments of the present disclosure.

As shown in FIG. 6, the device may include: a first receiving module 12, a first determining module 14, a first verifying module 16, and a first forwarding module 18.

The first receiving module 12 is configured to receive a connection packet sent by the client for establishing a TCP connection with the server. The first determining module 14 is configured to determine the packet type of the connection packet, where the packet type of the connection packet at least includes: SYN packet and ACK packet. The first verifying module 16 is configured to, when the packet type of the connection packet is ACK packet, utilizing the connection verification information to perform verification of the ACK packet, where the connection verification information is generated based on the SYN packet. The first forwarding module 18 is configured to, when the verification of the ACK packet is passed, forward the ACK packet to the connection device.

When establishing the TCP connection, the server may at least receive the SYN packet and the ACK packet that are sent by the client. Through the aforementioned first forwarding module 12, the first determining module 14, the first verifying module 16, and the first forwarding module 18, the protection device configured at the server may perform processing on the connection packet based on the packet type of the connection packet after receiving the connection packet sent by the client that is configured to establish TCP connection with the server. When the packet type of the connection packet is ACK packet, verification of the ACK packet is performed. When the ACK packet passes verification, the ACK packet is forwarded to the connection device configured at the server, thereby establishing communication connection between the client and the server through the connection device. Accordingly, the objective of defending against the SYN FLOOD attack can be achieved, thereby realizing the technical effect of improving the performance of defending against the SYN FLOOD attack. Further, issues of low protection performance and delay in connection response caused by the need to re-establish connection after validating the TCP connection sent by the client may be solved.

The protection device that adopts the aforementioned processing method for TCP connection may replace the server to establish the handshake process of the TCP connection with the client, thereby completing verification of the SYN packet. The protection device forwards the ACK packet sent by the normal client that is configured for TCP connection to the connection device, and the connection device may create the TCP connection based on information of the ACK packet. A complete establishment process of TCP connection is fulfilled by the protection device and the connection device together, without letting the client to sense the process. Accordingly, during SYN FLOOD defending process, the verification and the establishment of the TCP connection may be effectively completed, which ensures the client's experience.

As an optional embodiment, the aforementioned device further includes: a counting module 51, a second determining module 53, a generating module 55, and a second forwarding module 57.

The counting module 51 is configured to count the packet number of the SYN packets within a pre-configured period of time. The second determining module 53 is configured to determine whether the packet number is greater than or equal to a pre-configured threshold. The generating module 55 is configured to generate connection verification information based on the SYN packets when the packet number is greater than or equal to the threshold. The second forwarding module 57 is configured to forward the SYN packets to the server when the packet number is smaller than the threshold.

Further, when the received packet type is SYN packet, through the aforementioned counting module 51, the second determining module 53, the generating module 55, and the second forwarding module 57, the protection device conducts counting processing on the number of the received SYN packets, and counts the packet number of the SYN packets received in a pre-configured period of time. When the packet number of the SYN packets received within the pre-configured period of time exceeds a pre-configured threshold, SYN FLOOD attack may occur. Thus, verification of the SYN packets that are received is performed. When the packet number of the SYN packets received within the pre-configured period of time is smaller than a pre-configured threshold, it is considered that SYN FLOOD attack does not occur, the SYN packets are directly forwarded to the connection device, and the connection device configured at the server directly establish a TCP connection with the client.

As an optional embodiment, the aforementioned device may further include a first acquiring module 19 and a storage module 20.

The first acquiring module 19 is configured to acquire a first client address of the client that sends the ACK packet. The storing module 20 is configured to save the first client address to a pre-created client address list.

Specifically, when the verification of the ACK packet is passed, the client that sends the ACK packet may be confirmed as a legal client conducting normal access. Thus, the aforementioned first acquiring module 19 and the storing module 20 may acquire a first client address of the client, and add the first client address to the pre-created client address list. In particular, the client address list may be configured to record the address information of legal clients.

As an optional embodiment, the aforementioned device may further include a second acquiring module 71, a matching module 73, a third forwarding module 75, and a discarding module 77.

The second acquiring module 71 is configured to acquire a second client address of the client that sends the ACK packet when the verification of the ACK packet is not passed. The matching module 73 is configured to match the second client address with the client address list. The third forwarding module 75 is configured to forward the ACK packet to the server when the second client address matches an address in the client address list. The discarding module is configured to discard the ACK packet when the second client address does not match any address in the client address list.

Specifically, when the verification of the ACK packet is not passed, through the aforementioned second acquiring module 71, matching module 73, third forwarding module 75, and discarding module 77, a second client address of the client that sends the ACK packet is acquired, and the second client address is matched with the address information in the pre-created client address list. If the second client address matches the address information in the client address list, it is indicated that the ACK packet is sent by a legal client. Thus, the ACK packet information is forwarded to the connection device. If the second client address does not match the address information in the client address list, the client is considered as an illegal client, and the ACK packet sent by the client is discarded.

### Embodiment 4

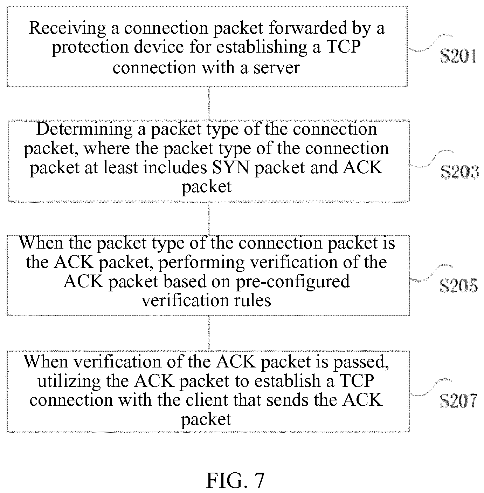

According to embodiment of the present disclosure, a processing method for TCP connection is further provided. The method may be applied to a connection device. FIG. 7 illustrates a flowchart schematic view of a processing method for TCP connection according to embodiments of the present disclosure.

As shown in FIG. 7, the aforementioned processing method for TCP connection may include following steps:
Step S201, receiving a connection packet forwarded by the protection device for establishing a TCP connection with a server.
Step S203, determining a packet type of the connection packet, where the packet type of the connection packet at least includes SYN packet and ACK packet.
Step S205, when the packet type of the connection packet is the ACK packet, performing verification of the ACK packet based on pre-configured verification rules.
Step S207, when verification of the ACK packet is passed, utilizing the ACK packet to establish a TCP connection with the client that sends the ACK packet.

Specifically, through step S201 to S207, after receiving the connection packet forwarded by the protection device, the connection device determines the packet type of the connection packet. When the packet type of the connection packet is the ACK packet, verification of the ACK packet is performed based on pre-configured verification rules. When the verification of the ACK packet is passed, the ACK packet is utilized to establish the TCP connection with the client that sends the ACK packet. When the verification of the ACK packet is not passed, the ACK packet is sent to the kernel protocol stack for further processing by the kernel protocol stack. The verification rules are consistent with the verification rules in the protection device. Through the verification approach of SYN COOKIE, verification of the ACK packet is performed, and the specific verification approaches are not repeated herein.

As an optional embodiment, when the packet type of the connection packet is SYN packet, after determining the packet type of the connection packet at step S203, the aforementioned method may further include:
Step S204, establishing a TCP connection with a client based on the SYN packet.

Specifically, when the packet type of the connection packet is SYN packet, through step S204, the SYN packet is utilized to allow the connection device to establish the TCP connection with the client directly.

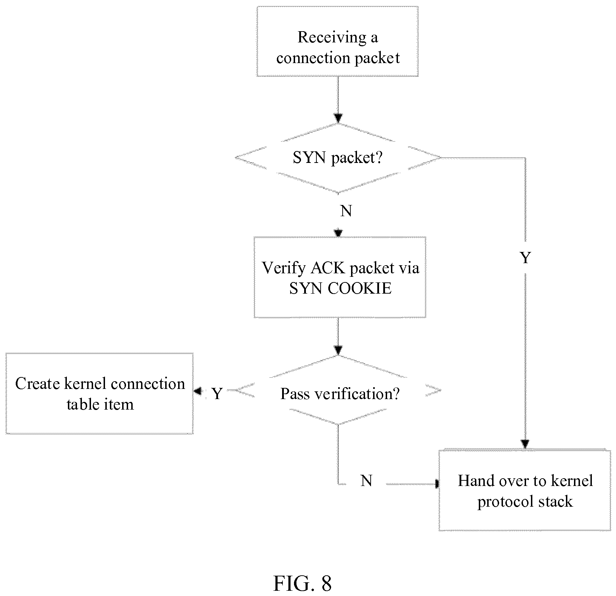

As an optional embodiment, as shown in FIG. 8, in practical applications, the steps executed by the connection device in the aforementioned method may include:
Step 1: receiving a connection packet forwarded by the protection device.
Step 2: if the connection packet is the SYN packet, handing over the SYN packet to the kernel protocol stack directly for processing of the TCP connection.
Step 3: if the connection packet is ACK packet, performing SYN COOKIE authorization of the ACK packet based on the verification approaches appointed by the protection device. When verification is passed, a connection table item is created in the kernel protocol stack, thereby establishing connection with the client based on the ACK packet. When the verification is not passed, handing over the ACK packet to the kernel protocol stack for processing of TCP connection.

### Embodiment 5

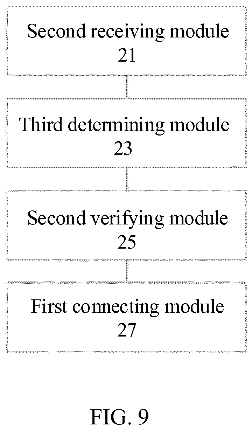

According to embodiments of the present disclosure, a processing device for TCP connection is further provided. The device is applied to a connection device. FIG. 9 illustrates a schematic view of a processing device for TCP connection according to embodiments of the present disclosure.

As shown in FIG. 9, the device may include: a second receiving module 21, a third determining module 23, a second verifying module 25, and a first connecting module 27.

The second receiving module 21 is configured to receive a connection packet forwarded by the protection device for establishing a TCP connection with the server. The third determining module 23 is configured to determine the packet type of the connection packet, where the packet type of the connection packet at least includes: SYN packet and ACK packet. The second verifying module 25 is configured to, when packet type of the connection packet is ACK packet, perform verification of the ACK packet based on the pre-configured verification rules. The first connecting module 27 is configured to, when the verification of the ACK packet is passed, utilize the ACK packet to establish the TCP connection with the client that sends the ACK packet.

Specifically, through the aforementioned second receiving module 21, the third determining module 23, the second verifying module 25, and the first connecting module 27, after receiving the connection packet forwarded by the protection device, the connection device determines the type of the connection packet. When the packet type of the connection packet is the ACK packet, verification of the ACK packet is performed based on pre-configured verification rules. When the verification of the ACK packet is passed, the ACK packet is utilized to establish the TCP connection with the client that sends the ACK packet. When the verification of the ACK packet is not passed, the ACK packet is sent to the kernel protocol stack for further processing by the kernel protocol stack. The verification rules are consistent with the verification rules in the protection device. Through the verification approach of SYN COOKIE, verification of the ACK packet is performed, and the specific verification approaches are not repeated herein.

As an optional embodiment, the aforementioned device may further include: a second connecting module 24. The second connecting module 24 may be configured to establish a TCP connection with the client based on the SYN packet.

Specifically, when the packet type of the connection packet is SYN packet, through the second connection module 24, the SYN packet is utilized to allow the connection device to establish the TCP connection directly with the client.

The sequence numbers of the aforementioned embodiments are for illustrative purposes only, and do not represent preference of the embodiments.

In the aforementioned embodiments of the present disclosure, descriptions of each embodiment have corresponding focuses. The portions not specifically described in certain embodiments may be find in related descriptions of other embodiments.

In various embodiments of the present disclosure, it should be understood that the disclosed method, the disclosed technical content may be implemented by other manners. That is, the device embodiments described above are merely for illustrative purposes. For example, the units may be merely partitioned by logic function. In practice, other partition manners may also be possible. For example, various units or components may be combined or integrated into another system, or some features may be omitted or left unexecuted. Further, mutual coupling or direct coupling or communication connection displayed or discussed therebetween may be via indirect coupling or communication connection of some communication ports, or units or modules, in electrical or other manners.

Units described as separated components may or may not be physically separated, and the components serving as display units may or may not be physical units. That is, the components may be located at one position or may be distributed over various network units. Optionally, some or all of the units may be selected to realize the purpose of solutions of embodiments herein according to practical needs.

Further, each functional unit in each embodiment of the present disclosure may be integrated in one processing unit, or each unit may exist physically and individually, or two or more units may be integrated in one unit. The aforementioned integrated units may be implemented in the form of hardware or may be implemented in the form of software function units.

When the integrated units are implemented as software function units, and are sold or used as independent products, they may be stored in a computer accessible storage medium. Based on such understanding, the technical solutions of the present disclosure, or the portions contributing to the prior art may be embodied in the form of a software product. The computer software product may be stored in a storage medium, and include several instructions to instruct a computer device (e.g., a personal computer, a server, or a network device) to execute all or some of the method steps of each embodiment. The storage medium described above may include portable storage device, Read-Only Memory (ROM), Random Access Memory (RAM), removable hard disk, a magnetic disc, an optical disc or any other media that may store program codes.

## Claims

1. A processing method for TCP connection implemented by a protection device, comprising:
receiving (S 102) a connection packet sent by a client for establishing a TCP connection with a server;
determining (S104) a packet type of the connection packet, wherein the packet type of the connection packet at least includes SYN packet and ACK packet;
when the packet type of the connection packet is the SYN packet, counting a packet number of SYN packets within a pre-configured period of time, determining whether the packet number is greater than or equal to a pre-configured threshold, generating connection verification information based on the SYN packets when the packet number is greater than or equal to the threshold, and forwarding the SYN packets to the server when the packet number is smaller than the threshold;
when (S 106) the packet type of the connection packet is the ACK packet, utilizing the connection verification information to perform verification of the ACK packet; and
when (S 108) the verification of the ACK packet is passed, forwarding the ACK packet to the server,
**characterized in that** after the verification of the ACK packet is passed, the method further comprises:
acquiring (S109) a first client address of the client that sends the ACK packet; and
saving (S110) the first client address to a pre-created client address list, and
wherein, after utilizing the connection verification information to perform verification of the ACK packet, the method further comprises:
when (S71) the verification of the ACK packet is not passed, acquiring a second client address of the client that sends the ACK packet;
matching (S73) the second client address with the client address list;
when (S75) the second client address matches an address in the client address list, forwarding the ACK packet to the server; and
when (S77) the second client address does not match any address in the client address list, discarding the ACK packet.

2. The method according to claim 1, wherein the method further includes:
when the second client address does not match any address in the client address list, adding the second client address to a pre-configured address list that is configured to record address information of illegal clients.

3. A protection device (10) for TCP connection, comprising:
a first receiving module (12), configured to receive a connection packet sent by a client for establishing a TCP connection with a server;
a first determining module (14), configured to determine a packet type of the connection packet, wherein the packet type of the connection packet at least includes SYN packet and ACK packet;
a first verifying module (16), configured to utilize connection verification information to perform verification of the ACK packet when the packet type of the connection packet is the ACK packet, wherein the connection verification information is generated based on the SYN packet; and
a first forwarding module (18), configured to forward the ACK packet to the server when verification of the ACK packet is passed,
wherein the device further includes:
a counting module (51), configured to count a packet number of the SYN packets within a pre-configured period of time;
a second determining module (53), configured to determine whether the packet number is greater than or equal to a pre-configured threshold;
a generating module (55), configured to generate connection verification information based on the SYN packets when the packet number is greater than or equal to the threshold; and
a second forwarding module (57), configured to forward the SYN packets to the server when the packet number is smaller than the threshold,
**characterized in that** the device further includes:
a first acquiring module (19), configured to acquire a first client address of the client that sends the ACK packet;
a storing module (20), configured to save the first client address to a pre-created client address list;
a second acquiring module (71), configured to acquire a second client address of the client that sends the ACK packet when the verification of the ACK packet is not passed;
a matching module (73), configured to match the second client address with the client address list;
a third forwarding module (75), configured to forward the ACK packet to the server when the second client address matches an address in the client address list; and
a discarding module (77), configured to discard the ACK packet when the second client address does not match any address in the client address list.

4. A processing method for TCP connection, comprising:
receiving (S 102), by a protection device, a connection packet sent by a client for establishing a TCP connection with a server;
determining (S104), by the protection device, a packet type of the connection packet,
wherein the packet type of the connection packet at least includes SYN packet and ACK packet;
when the packet type of the connection packet is the SYN packet, counting, by the protection device, a packet number of SYN packets within a pre-configured period of time, determining, by the protection device, whether the packet number is greater than or equal to a pre-configured threshold, generating, by the protection device, connection verification information based on the SYN packets when the packet number is greater than or equal to the threshold, and forwarding, by the protection device, the SYN packets to the server when the packet number is smaller than the threshold;
when (S106) the packet type of the connection packet is the ACK packet, utilizing, by the protection device, the connection verification information to perform verification of the ACK packet;
after utilizing the connection verification information to perform verification of the ACK packet, acquiring(S71), by the protection device, a second client address of the client that sends the ACK packet when the verification of the ACK packet is not passed, matching (S73), by the protection device, the second client address with the client address list, forwarding(S75), by the protection device, the ACK packet to the server when the second client address matches an address in the client address list, and discarding(S77), by the protection device, the ACK packet when the second client address does not match any address in the client address list;
when (S108) the verification of the ACK packet is passed, forwarding, by the protection device, the ACK packet to the server;
after the verification of the ACK packet is passed, acquiring (S109), by the protection device, a first client address of the client that sends the ACK packet, and saving (S110), by the protection device, the first client address to a pre-created client address list;
receiving (S201), by a connection device configured at the server, the connection packet forwarded by the protection device for establishing a TCP connection with the server;
determining (S203), by the connection device, the packet type of the connection packet;
when (S205) the packet type of the connection packet is the ACK packet, performing, by the connection device, verification of the ACK packet based on pre-configured verification rules; and
when (S207) verification of the ACK packet is passed, utilizing, by the connection device, the ACK packet to establish the TCP connection with the client that sends the ACK packet.

5. The method according to claim 4, further comprising:
when verification of the ACK packet is not passed, sending, by the connection device, the ACK packet to a kernel protocol stack for further processing by the kernel protocol stack.

6. The method according to claim 4, further comprising:
when the packet type of the connection packet is SYN packet, establishing, by the connection device, a TCP connection with the client based on the SYN packet, thereby allowing the server to establish the TCP connection with the client directly.

7. The method according to claim 4, further comprising:
when verification of the ACK packet is passed, creating, by the connection device, a connection table item in a kernel protocol stack, thereby establishing connection with the client based on the ACK packet.

8. A processing system for TCP connection, comprising:
a protection device (10) according to claim 3; and
a connection device (30) that is configured at a server, comprising:
a second receiving module (21), configured to receive a connection packet forwarded by the protection device (10) for establishing a TCP connection with the server;
a third determining module (23), configured to determine a packet type of the connection packet;
a second verifying module (25), configured to perform verification of the ACK packet based on pre-configured verification rules when the packet type of the connection packet is a ACK packet; and
a first connecting module (27), configured to utilize the ACK packet to establish a TCP connection with the client that sends the ACK packet when verification of the ACK packet is passed.

## Patentansprüche

1. Verarbeitungsverfahren für eine TCP-Verbindung, die durch eine Schutzvorrichtung implementiert wurde, umfassend:
Empfangen (S102) eines Verbindungspakets, das von einem Client zum Herstellen einer TCP-Verbindung mit einem Server gesendet wurde;
Bestimmen (S104) eines Pakettyps des Verbindungspakets, wobei der Pakettyp des Verbindungspakets mindestens ein SYN-Paket und ein ACK-Paket umfasst;
wenn der Pakettyp des Verbindungspakets das SYN-Paket ist, Zählen einer Paketanzahl von SYN-Paketen in einem vorkonfigurierten Zeitraum, Bestimmen, ob die Paketanzahl größer oder gleich einem vorkonfigurierten Schwellenwert ist, Erzeugen einer Verbindungsüberprüfungsinformation basierend auf den SYN-Paketen, wenn die Paketanzahl größer oder gleich dem Schwellenwert ist, und Weiterleiten der SYN-Pakete an den Server, wenn die Paketanzahl kleiner ist als der Schwellenwert;
wenn (S106) der Pakettyp des Verbindungspakets das ACK-Paket ist, Verwenden der Verbindungsüberprüfungsinformation, um die Überprüfung des ACK-Pakets durchzuführen; und
wenn (S108) die Überprüfung des ACK-Pakets erfolgreich war, Weiterleiten des ACK-Pakets an den Server,
**dadurch gekennzeichnet, dass**
nachdem die Überprüfung des ACK-Pakets erfolgreich war, das Verfahren ferner umfasst:
Erfassen (S109) einer ersten Client-Adresse des Clients, der das ACK-Paket sendet; und
Speichern (S110) der ersten Client-Adresse in einer vorerzeugten Client-Adressliste, und
wobei nach dem Verwenden der Verbindungsüberprüfungsinformation, um die Überprüfung des ACK-Pakets durchzuführen, das Verfahren ferner umfasst:
wenn (S71) die Überprüfung des ACK-Pakets nicht erfolgreich war, Erfassen einer zweiten Client-Adresse des Clients, der das ACK-Paket sendet;
Abgleichen (73) der zweiten Client-Adresse mit der Client-Adressliste;
wenn (S75) die zweite Client-Adresse einer Adresse in der Client-Adressliste entspricht, Weiterleiten des ACK-Pakets an den Server; und
wenn (S77) die zweite Client-Adresse keiner Adresse in der Client-Adressliste entspricht, Verwerfen des ACK-Pakets.

2. Verfahren nach Anspruch 1, wobei das Verfahren ferner umfasst:
wenn die zweite Client-Adresse keiner Adresse in der Client-Adressliste entspricht, Hinzufügen der zweiten Client-Adressliste zu einer vorkonfigurierten Adressliste, die konfiguriert ist, um Adressinformationen illegaler Clients aufzunehmen.

3. Schutzvorrichtung (10) für TCP-Verbindung, umfassend:
ein erstes Empfangsmodul (12), das dazu ausgelegt ist, ein Verbindungspaket zu empfangen, das von einem Client zum Herstellen einer TCP-Verbindung mit einem Server gesendet wurde;
ein erstes Bestimmungsmodul (14), das dazu ausgelegt ist, einen Pakettyp des Verbindungspakets zu bestimmen, wobei der Pakettyp des Verbindungspakets mindestens ein SYN-Paket und ein ACK-Paket umfasst;
ein erstes Überprüfungsmodul (16), das dazu ausgelegt ist, die Verbindungsüberprüfungsinformation zu verwenden, um die Überprüfung des ACK-Pakets durchzuführen, wenn der Pakettyp des Verbindungspakets das ACK-Paket ist, wobei die Verbindungsüberprüfungsinformation basierend auf dem SYN-Paket erzeugt wird; und
ein erstes Weiterleitungsmodul (18), das dazu ausgelegt ist, das ACK-Paket an den Server weiterzuleiten, wenn die Überprüfung des ACK-Pakets erfolgreich war,
wobei die Vorrichtung ferner umfasst:
ein Zählmodul (51), das dazu ausgelegt ist, eine Paketanzahl der SYN-Pakete in einem vorkonfigurierten Zeitraum zu zählen;
ein zweites Bestimmungsmodul (53), das dazu ausgelegt ist, zu bestimmen, ob die Paketanzahl größer oder gleich einem vorkonfigurierten Schwellenwert ist;
ein Erzeugungsmodul (55), das dazu ausgelegt ist, eine Verbindungsüberprüfungsinformation basierend auf den SYN-Paketen zu erzeugen, wenn die Paketanzahl größer als der oder gleich dem Schwellenwert ist; und
ein zweites Weiterleitungsmodul (57), das dazu ausgelegt ist, die SYN-Pakete an den Server weiterzuleiten, wenn die Paketanzahl kleiner ist als der Schwellenwert,
**dadurch gekennzeichnet, dass**
die Vorrichtung ferner umfasst:
ein erstes Erfassungsmodul (19), das dazu ausgelegt ist, eine erste Client-Adresse des Clients zu erfassen, der das ACK-Paket sendet;
ein Speichermodul (20), das dazu ausgelegt ist, die erste Client-Adresse in eine vorerzeugte Client-Adressliste zu speichern;
ein zweites Erfassungsmodul (71), das dazu ausgelegt ist, eine zweite Client-Adresse des Clients zu erfassen, der das ACK-Paket sendet, wenn die Überprüfung des ACK-Pakets nicht erfolgreich war;
ein Abgleichungsmodul (73), das dazu ausgelegt ist, die zweite Client-Adresse mit der Client-Adressliste abzugleichen;
ein drittes Weiterleitungsmodul (75), das dazu ausgelegt ist, das ACK-Paket an den Server weiterzuleiten, wenn die zweite Client-Adresse mit einer Adresse in der Client-Adressliste übereinstimmt; und
ein Verwerfungsmodul (77), das dazu ausgelegt ist, das ACK-Paket zu verwerfen, wenn die zweite Client-Adresse mit keiner Adresse in der Client-Adressliste übereinstimmt.

4. Verarbeitungsverfahren für eine TCP-Verbindung, umfassend:
Empfangen (S102) eines Verbindungspakets, das von einem Client zum Herstellen einer TCP-Verbindung mit einem Server gesendet wurde, durch eine Schutzvorrichtung;
Bestimmen (S104) eines Pakettyps des Verbindungspakets durch die Schutzvorrichtung, wobei der Pakettyp des Verbindungspakets mindestens ein SYN-Paket und ein ACK-Paket umfasst;
wenn der Pakettyp des Verbindungspakets das SYN-Paket ist, Zählen einer Paketanzahl von SYN-Paketen in einem vorkonfigurierten Zeitraum durch die Schutzvorrichtung, Bestimmen, ob die Paketanzahl größer als der oder gleich einem vorkonfigurierten Schwellenwert ist, durch die Schutzvorrichtung, Erzeugen einer Verbindungsüberprüfungsinformation basierend auf den SYN-Paketen durch die Schutzvorrichtung, wenn die Paketanzahl größer als der oder gleich dem Schwellenwert ist, und Weiterleiten der SYN-Pakete an den Server durch die Schutzvorrichtung, wenn die Paketanzahl kleiner ist als der Schwellenwert;
wenn (S106) der Pakettyp des Verbindungspakets das ACK-Paket ist, Verwenden der Verbindungsüberprüfungsinformation durch die Schutzvorrichtung, um die Überprüfung des ACK-Pakets durchzuführen; und
nach dem Verwenden der Verbindungsüberprüfungsinformation, um die Überprüfung des ACK-Pakets durchzuführen, Erfassen (S71) einer zweiten Client-Adresse des Clients, der das ACK-Paket sendet, durch die Schutzvorrichtung, wenn die Überprüfung des ACK-Pakets nicht erfolgreich war, Abgleichen (S73) der zweiten Client-Adresse mit der Client-Adressliste durch die Schutzvorrichtung, Weiterleiten (S75) des ACK-Pakets an den Server durch die Schutzvorrichtung, wenn die zweite Client-Adresse mit einer Adresse in der Client-Adressliste übereinstimmt, Verwerfen (S77) des ACK-Pakets durch die Schutzvorrichtung, wenn die zweite Client-Adresse mit keiner Adresse in der Client-Adressliste übereinstimmt;
wenn (S108) die Überprüfung des ACK-Pakets erfolgreich war, Weiterleiten des ACK-Pakets an den Server durch die Schutzvorrichtung;
nachdem die Überprüfung des ACK-Pakets erfolgreich war, Erfassen (S109) einer ersten Client-Adresse des Clients, der das ACK-Paket sendet, durch die Schutzvorrichtung, und Speichern (S110) der ersten Client-Adresse in einer vorerzeugten Client-Adressliste durch die Schutzvorrichtung;
Empfangen (S201) des Verbindungspakets, das durch die Schutzvorrichtung zur Herstellung einer TCP-Verbindung mit dem Server weitergeleitet wurde, durch eine Verbindungseinrichtung, die durch den Server ausgelegt ist;
Bestimmen (S203) des Pakettyps des Verbindungspakets durch die Verbindungsvorrichtung;
wenn (S205) der Pakettyp des Verbindungspakets das ACK-Paket ist, Durchführen der Überprüfung des ACK-Pakets basierend auf vorkonfigurierten Überprüfungsregeln durch die Verbindungsvorrichtung; und
wenn (S207) die Überprüfung des ACK-Pakets erfolgreich war, Verwenden des ACK-Pakets durch die Verbindungsvorrichtung, um die TCP-Verbindung mit dem Client, der das ACK-Paket sendet, herzustellen.

5. Verfahren nach Anspruch 4, ferner umfassend:
wenn die Überprüfung des ACK-Pakets nicht erfolgreich war, Senden des ACK-Pakets an einen Kernelprotokollstapel durch die Verbindungsvorrichtung zur weiteren Verarbeitung durch den Kernelprotokollstapel.

6. Verfahren nach Anspruch 4, ferner umfassend:
wenn der Pakettyp des Verbindungspakets ein SYN-Paket ist, Herstellen, einer TCP-Verbindung mit dem Client basierend auf dem SYN-Paket durch die Verbindungsvorrichtung und dadurch Ermöglichen, dass der Server die TCP-Verbindung mit dem Kunden direkt herstellt.

7. Verfahren nach Anspruch 4, ferner umfassend:
wenn die Überprüfung des ACK-Pakets erfolgreich war, Erzeugen eines Verbindungstabellenelements in einem Kernelprotokollstapel durch die Verbindungsvorrichtung und dadurch Herstellen der Verbindung mit dem Client basierend auf dem ACK-Paket.

8. Verarbeitungsverfahren für eine TCP-Verbindung, umfassend:
eine Schutzvorrichtung (10) nach Anspruch 3; und
eine Verbindungsvorrichtung (30), die auf einem Server ausgelegt ist, umfassend:
ein zweites Empfangsmodul (21), das dazu ausgelegt
ist, ein Verbindungspaket zu empfangen, das von der Schutzvorrichtung (10) zum Herstellen einer TCP-Verbindung mit einem Server weitergeleitet wurde;
ein drittes Bestimmungsmodul (23), das dazu ausgelegt ist, einen Pakettyp des Verbindungspakets zu bestimmen;
ein zweites Überprüfungsmodul (25), das dazu ausgelegt ist, die Überprüfung des ACK-Pakets basierend auf vorkonfigurierten Überprüfungsregeln durchzuführen, wenn der Pakettyp des Verbindungspakets ein ACK-Paket ist; und
ein erstes Verbindungsmodul (27), das dazu ausgelegt ist, das ACK-Paket zu verwenden, um eine TCP-Verbindung mit dem Client herzustellen, der das ACK-Paket sendet, wenn die Überprüfung des ACK-Pakets erfolgreich war.

## Revendications

1. Procédé de traitement pour une connexion TCP mis en œuvre par un dispositif de protection, comprenant :
recevoir (S102) un paquet de connexion envoyé par un client pour établir une connexion TCP avec un serveur,
déterminer (S104) un type de paquet du paquet de connexion, le type de paquet du paquet de connexion comprenant au moins un paquet SYN et un paquet ACK ;
lorsque le type de paquet du paquet de connexion est le paquet SYN, compter un nombre de paquets de paquets SYN à l'intérieur d'une période de temps préconfigurée, déterminer si le nombre de paquets est ou non supérieur ou égal à un seuil préconfiguré, générer des informations de vérification de connexion sur la base des paquets SYN lorsque le nombre de paquets est supérieur ou égal au seuil, et transférer les paquets SYN vers le serveur lorsque le nombre de paquets est inférieur au seuil ;
lorsque (S106) le type de paquet du paquet de connexion est le paquet ACK, utiliser les informations de vérification de connexion pour effectuer une vérification du paquet ACK ; et
lorsque (S108) la vérification du paquet ACK est réussie, transférer le paquet ACK vers le serveur,
**caractérisé par le fait que**
après que la vérification du paquet ACK est réussie, le procédé comprend en outre :
acquérir (S109) une première adresse de client du client qui envoie le paquet ACK ; et
sauvegarder (S110) la première adresse de client sur une liste d'adresses de client pré-créée, et
dans lequel, après l'utilisation des informations de vérification de connexion pour effectuer une vérification du paquet ACK, le procédé comprend en outre :
lorsque (S71) la vérification du paquet ACK n'est pas réussie, acquérir une seconde adresse de client du client qui envoie le paquet ACK ;
mettre en correspondance (S73) la seconde adresse de client avec la liste d'adresses de client ;
lorsque (S75) la seconde adresse de client correspond à une adresse dans la liste d'adresses de client, transférer le paquet ACK vers le serveur ; et
lorsque (S77) la seconde adresse de client ne correspond pas à une quelconque adresse dans la liste d'adresses de client, abandonner le paquet ACK.

2. Procédé selon la revendication 1, dans lequel le procédé comprend en outre :
lorsque la seconde adresse de client ne correspond pas à une quelconque adresse dans la liste d'adresses de client, ajouter la seconde adresse de client à une liste d'adresses préconfigurée qui est configurée pour enregistrer des informations d'adresse de clients illégaux.

3. Dispositif de protection (10) pour une connexion TCP, comprenant :
un premier module de réception (12), configuré pour recevoir un paquet de connexion envoyé par un client pour établir une connexion TCP avec un serveur ;
un premier module de détermination (14), configuré pour déterminer un type de paquet du paquet de connexion, le type de paquet du paquet de connexion comprenant au moins un paquet SYN et un paquet ACK ;
un premier module de vérification (16), configuré pour utiliser des informations de vérification de connexion pour effectuer une vérification du paquet ACK lorsque le type de paquet du paquet de connexion est le paquet ACK, les informations de vérification de connexion étant générées sur la base du paquet SYN ; et
un premier module de transfert (18), configuré pour transférer le paquet ACK vers le serveur lorsqu'une vérification du paquet ACK est réussie,
dans lequel le dispositif comprend en outre :
un module de comptage (51), configuré pour compter un nombre de paquets de paquets SYN à l'intérieur d'une période de temps préconfigurée ;
un second module de détermination (53), configuré pour déterminer si le nombre de paquets est ou non supérieur ou égal à un seuil préconfiguré ;
un module de génération (55), configuré pour générer des informations de vérification de connexion sur la base des paquets SYN lorsque le nombre de paquets est supérieur ou égal au seuil ; et
un deuxième module de transfert (57), configuré pour transférer les paquets SYN vers le serveur lorsque le nombre de paquets est inférieur au seuil,
**caractérisé par le fait que** le dispositif comprend en outre :
un premier module d'acquisition (19), configuré pour acquérir une première adresse de client du client qui envoie le paquet ACK ;
un module de stockage (20), configuré pour sauvegarder la première adresse de client sur une liste d'adresses de client pré-créée ;
un second module d'acquisition (71), configuré pour acquérir une seconde adresse de client du client qui envoie le paquet ACK lorsque la vérification du paquet ACK n'est pas réussie ;
un module de mise en correspondance (73), configuré pour mettre en correspondance la seconde adresse de client avec la liste d'adresses de client ;
un troisième module de transfert (75), configuré pour transférer le paquet ACK vers le serveur lorsque la seconde adresse de client correspond à une adresse dans la liste d'adresses de client ; et
un module d'abandon (77), configuré pour abandonner le paquet ACK lorsque la seconde adresse de client ne correspond pas à une quelconque adresse dans la liste d'adresses de client.

4. Procédé de traitement pour une connexion TCP, comprenant :
recevoir (S102), par un dispositif de protection, un paquet de connexion envoyé par un client pour établir une connexion TCP avec un serveur ;
déterminer (S104), par le dispositif de protection, un type de paquet du paquet de connexion, le type de paquet du paquet de connexion comprenant au moins un paquet SYN et un paquet ACK ;
lorsque le type de paquet du paquet de connexion est le paquet SYN, compter, par le dispositif de protection, un nombre de paquets de paquets SYN à l'intérieur d'une période de temps préconfigurée, déterminer, par le dispositif de protection, si le nombre de paquets est ou non supérieur ou égal à un seuil préconfiguré, générer, par le dispositif de protection, des informations de vérification de connexion sur la base des paquets SYN lorsque le nombre de paquets est supérieur ou égal au seuil, et transférer, par le dispositif de protection, les paquets SYN vers le serveur lorsque le nombre de paquets est inférieur au seuil ;
lorsque (S106) le type de paquet du paquet de connexion est le paquet ACK, utiliser, par le dispositif de protection, les informations de vérification de connexion pour effectuer une vérification du paquet ACK ;
après l'utilisation des informations de vérification de connexion pour effectuer une vérification du paquet ACK, acquérir (S71), par le dispositif de protection, une seconde adresse de client du client qui envoie le paquet ACK lorsque la vérification du paquet ACK n'est pas réussie, mettre en correspondance (S73), par le dispositif de protection, la seconde adresse de client avec la liste d'adresses de client, transférer (S75), par le dispositif de protection, le paquet ACK vers le serveur lorsque la seconde adresse de client correspond à une adresse dans la liste d'adresses de client, et abandonner (S77), par le dispositif de protection, le paquet ACK lorsque la seconde adresse de client ne correspond pas à une quelconque adresse dans la liste d'adresses de client ;
lorsque (S108) la vérification du paquet ACK est réussie, transférer, par le dispositif de protection, le paquet ACK vers le serveur ;
après que la vérification du paquet ACK est réussie, acquérir (S109), par le dispositif de protection, une première adresse de client du client qui envoie le paquet ACK, et sauvegarder (S110), par le dispositif de protection, la première adresse de client sur une liste d'adresses de client pré-créée ;
recevoir (S201), par un dispositif de connexion configuré au niveau du serveur, le paquet de connexion transféré par le dispositif de protection pour établir une connexion TCP avec le serveur ;
déterminer (S203), par le dispositif de connexion, le type de paquet du paquet de connexion ;
lorsque (S205) le type de paquet du paquet de connexion est le paquet ACK, effectuer, par le dispositif de connexion, une vérification du paquet ACK sur la base de règles de vérification préconfigurées ; et
lorsque (S207) une vérification du paquet ACK est réussie, utiliser, par le dispositif de connexion, le paquet ACK pour établir la connexion TCP avec le client qui envoie le paquet ACK.

5. Procédé selon la revendication 4, comprenant en outre :
lorsqu'une vérification du paquet ACK n'est pas réussie, envoyer, par le dispositif de connexion, le paquet ACK vers une pile de protocoles de noyau pour un traitement supplémentaire par la pile de protocoles de noyau.

6. Procédé selon la revendication 4, comprenant en outre :
lorsque le type de paquet du paquet de connexion est un paquet SYN, établir, par le dispositif de connexion, une connexion TCP avec le client sur la base du paquet SYN, permettant ainsi au serveur d'établir la connexion TCP avec le client directement.

7. Procédé selon la revendication 4, comprenant en outre :
lorsqu'une vérification du paquet ACK est réussie, créer, par le dispositif de connexion, un élément de table de connexion dans une pile de protocoles de noyau, établissant ainsi une connexion avec le client sur la base du paquet ACK.

8. Système de traitement pour une connexion TCP, comprenant :
un dispositif de protection (10) selon la revendication 3 ; et
un dispositif de connexion (30) qui est configuré au niveau d'un serveur, comprenant :
un deuxième module de réception (21), configuré pour recevoir un paquet de connexion transféré par le dispositif de protection (10) pour établir une connexion TCP avec le serveur ;
un troisième module de détermination (23), configuré pour déterminer un type de paquet du paquet de connexion ;
un second module de vérification (25), configuré pour effectuer une vérification du paquet ACK sur la base de règles de vérification préconfigurées lorsque le type de paquet du paquet de connexion est un paquet ACK ; et
un premier module de connexion (27), configuré pour utiliser le paquet ACK pour établir une connexion TCP avec le client qui envoie le paquet ACK lorsqu'une vérification du paquet ACK est réussie.
